# EUROPÄISCHE PATENTSCHRIFT

(11) **EP 3 966 504 B1**
(45) Veröffentlichungstag und Bekanntmachung des Hinweises auf die Patenterteilung: **06.07.2022**
(21) Anmeldenummer: 20746212.8
(22) Anmeldetag: 28.07.2020
(51) Int. Cl.: F27B 7/34, F23K 3/00, C04B 7/43, C04B 7/44, F23G 7/10, F23G 5/00, C04B 7/12

(54) **THERMISCHE BEHANDLUNG VON MINERALISCHEN STOFFEN IN REDUZIERENDER ATMOSPHÄRE MITTELS ALTERNATIVER BRENNSTOFFE**
THERMAL TREATMENT OF MINERAL MATERIALS IN A REDUCING ATMOSPHERE USING ALTERNATIVE FUELS
TRAITEMENT THERMIQUE DE MATIÈRES MINÉRALES DANS UNE ATMOSPHÈRE RÉDUCTRICE À L'AIDE DE CARBURANTS ALTERNATIFS

(30) Priorität: 02.08.2019 BE 201905505; 02.08.2019 DE 102019211664
(43) Veröffentlichungstag der Anmeldung: 16.03.2022
(73) Patentinhaber: thyssenkrupp Industrial Solutions AG, 45143 Essen (DE); thyssenkrupp AG, 45143 Essen (DE)
(72) Erfinder: LEMKE, Jost, 59320 Ennigerloh (DE); VECKENSTEDT, Ines, 33397 Rietberg (DE); GRUND, Guido, 59457 Werl (DE); KOSLOWSKI, Lutz, 59269 Beckum (DE); BRINKMANN, Christian, 33611 Bielefeld (DE)
(74) Vertreter: thyssenkrupp Intellectual Property GmbH
(86) Internationale Anmeldenummer: PCT/EP2020/071201
(87) Internationale Veröffentlichungsnummer: WO 2021/023567

(56) Entgegenhaltungen:
- EP-A1- 2 908 078
- DE-A1-102005 052 753
- DE-A1-102014 116 373
- DE-A1-102016 111 291

## Beschreibung

Die Erfindung betrifft ein Verfahren zur Herstellung eines Klinkerersatzstoffes und eine Vorrichtung zur Herstellung eines Klinkerersatzstoffes.

Zement ist ein bedeutender Rohstoff für das Baugewerbe und die moderne Bauindustrie. Der Werkstoff kommt dabei bei sehr vielen unterschiedlichen Projekten wie den Gebäudebau oder auch in Baumaßnahmen wie dem Brücken- und Tunnelbau zum Einsatz. Zusammen mit Zuschlagsstoffen, beispielsweise Sand, sowie Wasser härtet Zement zu Beton aus. Zement härtet als Wassermörtel auch unter Wasser aus. *"Der wichtigste Kalk-Ton-Zement ist der "Portlandzement". Er besteht aus 58-66* % *CaO, 18-26 %SiO₂, 4-12* % *Al₂O₃, 2-5* % *Fe₂O₃ und enthält hauptsächlich Ca₃SiO₄ (Molverhältnis ca. 2:1), darüber hinaus ca. 10 Gew.* % *Ca₃Al₂O₆ und 1 Gew.* % *Ca₂AlFeO₅".* (Holleman, Wiberg, Lehrbuch der Anorganischen Chemie, 102. Auflage, de Gruyter, 2007, S. 1257, ISBN: 978-3-11-017770-1, im folgenden Holleman, Wiberg).

Wie in beispielsweise der DE 10 2004 038 313 A1 beschrieben, kann die Zementherstellung die Grundschritte Vorwärmung, Kalzinierung, Klinkererzeugung im Brennofen und Abkühlung umfassen.

Ein wichtiges Ausgangsprodukt in der Zementherstellung sind Tonmineralien. Diese Tonmineralien, beispielsweise Kalksteinmergel, werden im weiteren Herstellungsverfahren insbesondere fein vermahlen gebrannt (ca. 1450 °C). Nach dem Abkühlen kann der gesinterte Zementklinker beispielsweise mit 2 - 5 % Gips oder Anhydrid vermahlen und in Säcke gepackt werden (Holleman, Wiberg, S.1257).

Aufgrund der erforderlichen hohen Brenntemperatur ist die Zementherstellung sehr energieintensiv. Um die Kosten der Zementherstellung niedrig zu halten, werden verschiedene, in der Regel kostengünstige, Stoffe verbrannt. Dies können brennbare Gase, z.B. Erdgas, brennbare Flüssigkeiten (z.B. Mineralöle) oder brennbare Feststoffe (z.B. Kohlestaub) sein. Häufig werden auch in anderen Produktionsprozessen anfallende Reststoffe verfeuert.

Der hohe Energieverbrauch in der klassischen Zementklinkerherstellung kombiniert mit einer weiterhin hohen Nachfrage nach Baumaterialien beinhaltet sowohl hohe Kohlendioxid- und auch Stickoxidemissionen in der Zementherstellung. Im Zuge im strenger werdender Umweltauflagen und Gesetze, sowie gleichzeitig steigenden Rohstoff- und Energiepreisen steigen die Anforderungen an die Ausgestaltung der Kalzinierungs- und Brennprozesse. Dies bedeutet, dass auch bei der Nutzung von billigen und kostengünstigen Brennstoffen die Bildung von Kohlendioxid und Stickoxiden soweit wie möglich reduziert werden muss.

Eine Möglichkeit zur Reduzierung des Kohlendioxidverbrauches ist der wenigstens teilweise Ersatz fossiler Brennstoffe, beispielsweise und insbesondere durch den Einsatz von Ersatzbrennstoffen, welche aus Abfällen gewonnen werden, beispielsweise Altreifen, Hausmüll oder Gewerbemüll, aber auch aus biologischen Materialien. Die Verbrennung von altreifen beispielsweise kann in solchen Anlagen typischer Weise aufgrund der Verfahrensparameter vergleichsweise sicher erfolgen. Da diese Abfälle bereits vorliegen, werden somit für die benötigte Energie keine zusätzlichen fossilen Brennstoffe verbraucht. Aufgrund Ihrer Eigenschaften (Größe bzw. Grobheit, Feuchtigkeit, variable Zusammensetzung, hohe Zündtemperatur, ...) kann es jedoch schwierig sein, gezielt eine unterstöchiometrische Verbrennung einzustellen.

Eine Möglichkeit zur Reduzierung des Kohlendioxidverbrauches ist der teilweise Ersatz des Zementklinkers durch entsprechende Ersatzstoffe, beispielsweise kalzinierter Ton. Beispiele finden sich hierfür in der DE 10 2011 014 498 A1.

Effiziente Kalzinierungsverfahren im Umfeld der Zementherstellung, insbesondere der Kalzinierung bedingen außerdem bei einer Optimierung des Kohlendioxidausstoßes und damit einer effizienten sowie sparsamen Verbrennung häufig recht hohe Bildungsraten von Stickoxiden (NOx). Hierzu sind teilweise zusätzliche und analagentechnisch recht komplexe Zusatzschritte oder Zusatzvorrichtungen erforderlich um die Stickoxidbildung zu minimieren.

DE 10 2004 038 313 A1 offenbart einen Brenn- bzw. Kalzinierofen zur Herstellung von Zement aus Ofenrohmaterial.

DE 10 2014 113 127 A1 offenbart ein Verfahren und Anlage zur thermischen Behandlung von flugfähigen Rohmaterial. Das Rohmaterial wird in ein von Heizgasen durchströmten Steigrohr eingeführt und dort thermisch behandelt.

DE 10 2008 031 165 A1 offenbart ein Verfahren zum Betreiben einer Anlage zur Herstellung von kalzinierten Ton. Erfindungsgemäß wird der Drehrohr- bzw. Röstofen zur Erzeugung von Heizgas als Brennkammer genutzt, durch eine Brennkammer ersetzt und/oder durch eine zusätzliche Brennkammer ersetzt.

DE 198 54 582 A1 offenbart ein Verfahren und eine Anlage zur thermischen Behandlung von mehlförmigen Rohmaterialien.

US 8,474,387 B2 offenbart eine Anlage und Verfahren zur Verbrennung von verschiedenen brennbaren Abfällen in der Zementherstellung.

DE 10 2011 014 498 A1 offenbart einen Klinkerersatzstoff und Verfahren zur Herstellung des auf dem Klinkerersatzstoff basierende Baustoffe.

Aus der DE 10 2014 116 373 A1 ist ein Verfahren zur Wärmebehandlung von Tonen und/oder Zeolithen unter reduzierenden Bedingungen bekannt.

Aus der DE 10 2016 111 291 A1 sind eine Vorrichtung und ein Verfahren zur Wärmebehandlung von mineralischem Gut bekannt.

Die Erfindung hat die Aufgabe ein Verfahren zur Herstellung eines Klinkerersatzstoffes bereitzustellen, welches eine effizientere Verbrennung verschiedener Brennstoffe unter Minimierung des Schadstoffaustoßes, insbesondere von Kohlendioxid und Stickoxiden ermöglicht. Ebenso ist es die Aufgabe, die Atmosphäre der thermischen Behandlung gezielt einstellen zu können, um durch eine unterstöchiometrische Verbrennung eine reduzierende Atmosphäre zu erzeugen.

Diese Aufgabe wird eine Vorrichtung mit den in Anspruch 1 angegebenen Merkmalen sowie durch das Verfahren mit den in Anspruch 5 angegebenen Merkmalen gelöst. Vorteilhafte Ausgestaltungen gehen aus den Unteransprüchen hervor.

Die erfindungsgemäße Vorrichtung zur thermischen Behandlung von mineralischen Stoffen weist eine erste Brennkammer, eine zweite Brennkammer und einen Reaktor zur thermischen Behandlung von mineralischen Stoffen auf. Die erste Brennkammer ist zur Verbrennung eines ersten Brennstoffs ausgebildet. Die erste Brennkammer und die zweite Brennkammer sind mit einer ersten Verbindung zur Überfügung heißer Gase aus der ersten Brennkammer in die zweite Brennkammer verbunden. Die zweite Brennkammer ist zur Verbrennung eines zweiten Brennstoffes ausgebildet. Die zweite Brennkammer und der Reaktor sind mit einer zweiten Verbindung zur Überführung heißer Gase aus der zweiten Brennkammer in den Reaktor verbunden. Die erste Brennkammer weist eine erste Brennstoffzuführvorrichtung zur Zuführung des ersten Brennstoffes auf. Die zweite Brennkammer weist eine zweite Brennstoffzuführvorrichtung zur Zuführung des zweiten Brennstoffes auf. Der Reaktor weist eine dritte Brennstoffzuführung zur Zuführung eines dritten Brennstoffes auf. Der erste Brennstoff und der zweite Brennstoff sind verschieden.

Vorteil der erfindungsgemäßen Vorrichtung ist, dass die Brennstoffe unterschiedlich gewählt werden können. Insbesondere und bevorzugt ist der erste Brennstoff ausgewählt ist aus der Gruppe umfassend Kohle, Kohlenstaub, Öl, Erdgas, Biogas, Methan, Ethan, Propan, Butan, Wasserstoff, und der zweite Brennstoff ist ein Ersatzbrennstoff. Mit dem ersten Brennstoff in der ersten Brennkammer wird eine ausreichende Temperatur erzeugt, um in der zweiten Brennkammer auch Brennstoffe zu verbrenne, welche eine erhöhte Temperatur benötigen, beispielsweise Biomasse, die dabei getrocknet werden muss. Aber auch beispielsweise Altreifen können nicht so leicht entzündet werden.

Ersatzbrennstoffe sind Brennstoffe, die aus Abfällen gewonnen werden. Dabei kann es sich sowohl um feste, flüssige oder gasförmige Abfälle handeln, die in unterschiedlicher Aufbereitungstiefe aufbereitet sind. Die zur Herstellung von Ersatzbrennstoff verwendeten Abfälle können beispielsweise aus Haushalten, Industrie oder Gewerbe stammen. Unter den Begriff Ersatzbrennstoff fallen sämtliche nicht-fossilen Brennstoffe. Sie können aus selektiv gewonnenen, produktionsspezifischen (Gewerbe-)Abfällen wie auch aus unspezifischen Abfallgemischen, wie Siedlungsabfall, hergestellt werden. Beispielsweise werden die aus ausgewählten Stoffströmen gezielt aufbereiteten Sekundärbrennstoffe aufgrund der höheren Qualitätsanforderungen durch anspruchsvolle Verarbeitungstechnologien maßgeblich in den Zementkraftwerken eingesetzt. Mit Energieanteilen von ungefähr 15 % und darüber eignen sich Rohabfälle wie Altreifen, Kunststoffe, Industrie- und Gewerbeabfälle sowie Tiermehl und Tierfette zur Ersatzbrennstoffaufbereitung für den Einsatz in der Zementindustrie. Mit geringeren Energieanteilen werden unter anderem auch Altöl, Lösungsmittel sowie Siedlungsabfälle für die Aufbereitung genutzt. Flugfähige Fraktionen der Sekundärbrennstoffe werden auch als "Fluff" bezeichnet und in der Zementindustrie verwendet.

Der dritte Brennstoff ist beispielsweise und insbesondere ausgewählt ist aus der Gruppe umfassend Kohle, Kohlenstaub, Öl, Erdgas, Biogas, Methan, Ethan, Propan, Butan, Wasserstoff. Der dritte Brennstoff lässt sich dann vergleichsweise gut zu dosieren, um eine unterstöchiometrische Verbrennung zu erzielen und verbrennt einfach und zuverlässig im Reaktor.

Eine Brennstoffzuführvorrichtung ist stark abhängig vom verwendeten Brennstoff. Im Falle fester Brennstoff kann es sich um ein Förderband oder eine Schnecke handeln, bei flüssigen Brennstoffen um eine Düse, bei Gasförmigen Brennstoffen um ein Ventil. Ein fester Brennstoff, beispielsweise Kohlenstaub kann auch zunächst in einen Luftstrom eingebracht und somit in gasförmiger Form durch die Brennstoffzuführvorrichtung eingebracht werden.

Erfindungsgemäß weist die erste Brennkammer eine erste Sauerstoffzuführvorrichtung auf und die zweite Brennkammer weist eine zweite Sauerstoffzuführvorrichtung auf. Die zweite Brennkammer, die zweite Verbindung und/oder der Reaktor weist einen Sensor zur Erfassung des Sauerstoffgehalts auf. Besonders bevorzugt wird die Messung des Sauerstoffgehalts zur Regelung der durch die Sauerstoffzuführvorrichtungen zugeführte Menge an Sauerstoff geregelt.

Über eine Sauerstoffzuführvorrichtung wird ein Gas mit Sauerstoff zugeführt. Hierbei kann es sich beispielsweise um Luft, reinen Sauerstoff aber auch um mit Sauerstoff abgereicherte Prozessgase, beispielsweise mit einem Sauerstoffanteil von nur 5 Vol.-% handeln. Daher kann das Gas auch einen Feststoffanteil, beispielsweise Asche oder Ruß aufweisen. Die Sauerstoffzuführvorrichtung kann hierbei eine rein passive Öffnung sein, um beispielsweise Luft aus der Umgebung einzulassen. Es kann sich um einen Ventilator handeln, um das Gas aktiv zu fördern. Insbesondere bei Verwendung von Prozessgasen kann es sich bei der Sauerstoffzuführvorrichtung um ein Ventil zu Regulierung des Zuflusses handeln.

In einer weiteren Ausführungsform der Erfindung ist die zweite Brennkammer zur Rostfeuerung des zweiten Brennstoffes ausgebildet. Insbesondere wird der feste zweite Brennstoff, welcher ein Ersatzbrennstoff ist, über das Rost oder mit dem Rost gefördert, insbesondere auch um Asche an der dem Eintrag des zweiten Brennstoffs gegenüberliegenden Seite wieder auszutragen. Optional und bevorzugt kann Sauerstoff von unten durch das Rost zugeführt werden, um den Ersatzbrennstoff effizienter zu verbrennen.

In einer weiteren Ausführungsform der Erfindung ist der Reaktor ein Drehrohrofen oder ein Calcinator, insbesondere ein Flugstromcalcinator.

Die Vorrichtung kann beispielsweise einen Flugstromcalcinator umfassen. Der Flugstromcalcinator weist eine Produkteingangsöffnung (für das zu kalzinierendes Produkt) und einer Produktausgangsöffnung und eine Brenngasöffnung auf. Die Produkteingangsöffnung ist bevorzugt in Brenngasstromrichtung oberhalb der Brenngasöffnung angeordnet. Diese Anordnung bewirkt, dass ein flugfähiges (im Brenngasstrom mitführbarer) mineralisches Stoffgemisch (z.B. Tonmineralien) vom Brenngasstrom (Kalzinierungsstrom) durch den Flugstromcalcinator geführt werden kann und innerhalb des Flugstromcalcinators kalziniert wird. Die zweite Brennkammer ist mit der Brenngasöffnung und einer Verbrennungsgaszuführung (beispielsweise für Luft oder Luftgemische mit variierenden Sauerstoffanteil) und einer Brennstoffzuführung verbunden. Die zweite Brennkammer umfasst des Weiteren beispielsweise und bevorzugt eine Rostfeuerung. Die Rostfeuerung ermöglicht eine Verbrennung und Nutzung fester, flüssiger und auch hochviskoser Brennstoffe bzw. brennbare Abfallstoffe. Weiterhin ist eine Produktzuführungsleitung mit der Produkteingangsöffnung verbunden. Ergänzend ist eine Luftzuleitung vorgesehen, wobei die Luftzuleitung über mindestens ein Ventil mit dem Flugstromcalcinator und/oder der Brennkammer verbunden ist. Über die Luftzuleitung und gegebenenfalls angeschlossenen Pumpen lässt sich der Sauerstoffanteil im Flugstromcalcinator über das Ventil regeln und steuern.

Bevorzugt ist die Produktzuführungsleitung mit einer oder mehrerer Vorwärmvorrichtung(en), bevorzugt Zyklonvorwärmern, verbunden.

In einer bevorzugten Ausgestaltung der Erfindung ist einen Sensor zur MeDer SensorSauerstoffsonde ermöglicht eine Überwachung der Sauerstoffkonzentration im Flugstromcalcinator.

Weiterhin bevorzugt ist eine Einrichtung zur Datenverarbeitung mit dem Sensor und dem Ventil verbunden. Die Einrichtung zur Datenverarbeitung, welche mit dem Sensor verbunden ist, steuert den zusätzliche Gasstrom, beispielsweise über ansteuerbare Ventile und Pumpen. Die Einrichtung zur Datenverarbeitung umfasst bevorzugt eine Steuereinrichtung, z.B. Mikroprozessor mit Software und einen Signalwandler aus der Sauerstoffsonde.

In einem weiteren Aspekt betrifft die Erfindung ein Verfahren zur thermischen Behandlung von mineralischen Stoffen, wobei das Verfahren die folgenden Schritte aufweist:
a) Verbrennen eines ersten Brennstoffes in einer ersten Brennkammer,
b) Überführen der heißen Gase aus der ersten Brennkammer in eine zweite Brennkammer,
c) Verbrennen eines zweiten Brennstoffes in der zweiten Brennkammer,
d) Überführen der heißen Gase aus der zweiten Brennkammer in einen Reaktor,
e) Unterstöchiometrisches Verbrennen eines dritten Brennstoffes in dem Reaktor und thermisches Behandeln von mineralischen Stoffen.

Besonders bevorzugt wird das Verfahren in einer erfindungsgemäßen Vorrichtung durchgeführt.

Besonders bevorzugt werden die Gase in der ersten Brennkammer auf eine erste Temperatur erwärmt, welche ausreichend ist, um eine effiziente Verbrennung des zweiten Brennstoffs, des Ersatzbrennstoffes, zu gewährleisten. Die Gase werden in der zweiten Brennkammer weiter erhitzt, um eine ausreichende Temperatur aufzuweisen, um im Reaktor die thermische Behandlung der mineralischen Stoffe zu ermöglichen. Je nach verwendetem Reaktor um umzusetzenden Stoffen liegt diese Temperatur zwischen etwa 700 °C und 1500 °C, wobei im Falle einer Kalzinierung von Klinker im Reaktor die Temperatur beispielswiese in einem Bereich von 780 °C bis 880 °C liegt, im Falle der Kalzinierung von Klinkerersatzstoffen bei Temperaturen von 700 °C bis 1100 °C, im Falle der Sinterung von Klinker beispielsweise in einem Bereich von 1350 °C bis 1450 °C.

Durch dieses gestufte Verfahren ist es zum einen möglich, in der zweiten Brennkammer Ersatzbrennstoffe einzusetzen und so gezielt die Verwendung fossiler Rohstoffe zu reduzieren. Zum anderen kann durch eine unterstöchiometrische Verbrennung des dritten Brennstoffs im Reaktor eine reduzierende Atmosphäre geschaffen werden, um so optimale Produkteigenschaften, beispielsweise Farbe des Produkts, einzustellen.

In einer weiteren Ausführungsform der Erfindung wird die Zuführung des dritten Brennstoffes zur Erzielung der unterstöchiometrischen Verbrennung aufgrund wenigstens eines der gemessenen Parameter geregelt , wobei der Parameter ausgewählt ist aus der Gruppe Sauerstoffgehalt in der zweiten Brennkammer, Sauerstoffgehalt in der zweiten Verbindung, Sauerstoffgehalt im Reaktor, Eigenschaften, insbesondere Farbe, des Produktes des thermisch behandelten mineralischen Stoffes nach Entnahme aus dem Reaktor.

Alternativ oder zusätzlich kann auch die Sauerstoffzufuhr in den Reaktor aufgrund des gemessenen Parameters geregelt werden.

In einer weiteren Ausführungsform der Erfindung erfolgt das thermische Behandeln mit einem Sauerstoffpartialdruck pO₂ kleiner 10⁻⁸ bar, bevorzugt pO₂ kleiner 10⁻¹¹ bar.

In einer weiteren Ausführungsform der Erfindung erfolgt das thermische Behandeln mit einem Volumenverhältnis CO₂/CO kleiner 1000, bevorzugt kleiner 50.

In einer weiteren Ausführungsform der Erfindung erfolgt das thermische Behandeln bei einer Luftzahl (λ[Lambda]) kleiner 1, bevorzugt λ[Lambda] = 0,70 bis 0,99, besonders bevorzugt A[Lambda] = 0,85 bis 0,98. Die Luftzahl Lambda-Wert oder das Verbrennungsluftverhältnis ist definiert als das Verhältnis der zugeführten Luftmenge zur Luftmenge der stöchiometrischen Verbrennung (siehe auch Römpp, Chemie Lexikon, 9. Auflage, 1995, Seite 2437, "Lambda-Wert").

Weitere Schritte zur thermischen Behandlung sind beispielsweise und insbesondere ein Bereitstellen eines mineralischen, tonhaltigen Stoffgemisches. Das mineralische, tonhaltige Stoffgemisch enthält bevorzugt mindestens 5 Gew. % Tone, Tonerden, Schichtsilikate, beispielsweise Tonminerale, bevorzugt beispielsweise Kaolin oder Kaolingemische. In einer Rostfeuerung, wobei die Rostfeuerung in der zweiten Brennkammer angeordnet ist, erfolgt das Bereitstellen eines heißen Gasstromes, beispielsweise eines Kalzinierungsstroms. Der Ausdruck "Kalzinierungsstrom" beschreibt im Sinne der Erfindung den in der Brennkammer durch Verbrennung von Brennstoff auf der Rostfeuerung entstehenden Gasstrom aus Verbrennungsgasen. Die Rostfeuerung erlaubt die Verbrennung auch von festen, flüssigen und hochviskosen Brennstoffen. Die Rostfeuerung stellt den Kalzinierungsstrom und damit den Gasstrom zur Kalzinierung zur Verfügung. Das mineralische, tonhaltige Stoffgemisch wird im Kalzinierungsstroms unter unterstöchiometrischen Bedingungen in Bezug auf den Sauerstoffgehalt kalziniert und anschließend ein kalziniertes Stoffgemisch erhalten. Der Ausdruck "unterstöchiometrischen Bedingungen in Bezug auf den Sauerstoffgehalt" umfasst im Sinne der Erfindung bevorzugt zum einen Kalzinierungsbedingungen mit einem Sauerstoffgehalt welcher nicht ausreicht, um eine vollständige Oxidation der Tonmineralien zu ermöglichen und zum anderen eine Kalzinierung unter auch reduzierenden Bedingungen. Im Sinne der Erfindung können beide Reaktionsbedingungen nebeneinander vorliegen. Bevorzugt umfasst die Kalzinierung keine separate Oxidiationsreaktion unter überstöchiometrischen Sauerstoffüberschuss. Die "unterstöchiometrischen Bedingungen in Bezug auf den Sauerstoffgehalt" umfassen bevorzugt eine Luftzahl (Lambda) kleiner 1. Das erhaltene kalzinierte mineralische Gemisch kann einen Teil des Klinkers im Zement ersetzten. Aufgrund der erfindungsgemäßen Verfahrensführung lässt sich die Farbe des Produkts verändern und der Ausstoß von Stickoxiden verringern.

Bevorzugt umfasst das mineralische, tonhaltige Stoffgemisch Schichtsilikate, Tone, Feldspäte, bevorzugt Kaolin, Metakaolinit, Illit, Al-Si- Spinelle, Montmorillonit, Mullit, Schamott, Bentonit, Smectit, Chrysotil, Chlorit und/oder Vermiculit und/oder Gemische davon.

In einer bevorzugten Ausführungsform enthält das mineralische Stoffgemisch (1) 0,1 Gew. % bis 4 Gew. % Kohlenstoff. Überraschenderweise ermöglichen die voranstehend beschriebenen Kohlenstoffgehalte eine vorteilhafte Reduktion des im mineralischen Stoffgemisches enthaltenden Eisen. Dabei wird das (rote) Hämatit (Fe₂O₃) in graues Magnetit (Fe₃O₄) überführt. Magnetit verleiht dem Klinkerersatzstoff eine graue Farbe.

In einer weiteren bevorzugten Ausgestaltung der Erfindung erfolgt die Kalzinierung mit einer Temperatur von 800 °C bis 1100 °C im Kalzinierungsstrom.

Bevorzugt erfolgt die Kalzinierung in einem Flugstromcalcinator.

In einer bevorzugten Ausgestaltung des Verfahrens ist der der Flugstromcalcinator über ein Ventil regulierbar mit einem zusätzlichen Gasstrom verbunden. Über das Ventil kann der Sauerstoffgehalt und die Strömungsgeschwindigkeit individuell angepasst werden.

Bevorzugt weist der der zusätzliche Gasstrom einen Sauerstoffgehalt von 5 Vol. % bis 15 Vol. %, bevorzugt 7 Vol. % bis 12 Vol. % auf.

Weiterhin bevorzugt umfasst der zusätzliche Gasstrom rezirkulierte Luft umfasst, bevorzugt rezirkulierte Luft aus einer Filteranlage.

In einer bevorzugten Ausgestaltung wird der der zusätzliche Gasstrom in Abhängigkeit vom Sauerstoffgehalt im Flugstromcalcinator geregelt. Besonders bevorzugt wird der Sauerstoffgehalt über eine Sauerstoffsonde im Flugstromcalcinator gemessen. Der Ausdruck "Sauerstoffsonde" umfasst im Sinne der Erfindung bevorzugt Lambda-Sonden und/oder dotierte ZrO₂ - Sonden. Der O₂-Partialdruck lässt sich bevorzugt über die Nernst'sche Gleichung bestimmen. Über eine Einrichtung zur Datenverarbeitung, welche mit der Sauerstoffsonde verbunden ist, wird der zusätzliche Gasstrom, beispielsweise über ansteuerbare Ventile und Pumpen, gesteuert.

Bevorzugt wird das mineralischen Stoffgemisches in einem Zyklonvorwärmer vorgewärmt.

In einer bevorzugten Ausgestaltung erfolgt die Kalzinierung ohne einen zusätzlichen Schritt mit stöchiometrischen oder überstöchiometrischen Sauerstoffanteil. Die Vermeidung dieser Schritte vermindert den Ausstoß von Stickoxiden.

Bevorzugt wird das mineralischen Stoffgemisches vor der Kalzinierung vorgewärmt, besonders bevorzugt im Zyklonvorwärmer vorgewärmt.

In einer bevorzugten Ausgestaltung erfolgt die die Kalzinierung im Gleichstrom.

Die Erfindung wird im Folgenden anhand eines Beispiels näher erläutert. Das Beispiel schränkt die Erfindung nicht ein.

In einer Simulation wurde der Kohlendioxidausstoß bei der Herstellung einer Tonne Portlandzementklinker und der Herstellung von einer Tonne kalzinierten Ton, bevorzugt Kaolin, gemäß dem erfindungsgemäßen Verfahren verglichen.

**Tabelle 1:**

| | Temperatur [°C] | Kohlendioxidbildung [kg] |
|---|---|---|
| Portlandzementklinker | 1450 | 830 |
| kalzinierter Ton | 800 | 200 |
| Komposit-Zement (30 % kalzinierter Ton | - | 640 |

Aus der Tabelle 1 ist ersichtlich, dass die Herstellung von kalzinierten Kaolin über das erfindungsgemäße Verfahren die Kohlendioxidbildung etwa um den Faktor 4 absenkt. Zusätzlich ist mit 800 °C im Vergleich zu 1450 °C auch eine deutlich niedrigere Betriebstemperatur und damit Energieverbrauch erforderlich. Deutliche Absenkungen finden sich auch im Komposit-Zement.

Die Erfindung wird im Folgenden anhand der Figur näher erläutert. Die Figur schränkt die Erfindung nicht ein. Die Figur ist nicht maßstabsgetreu.

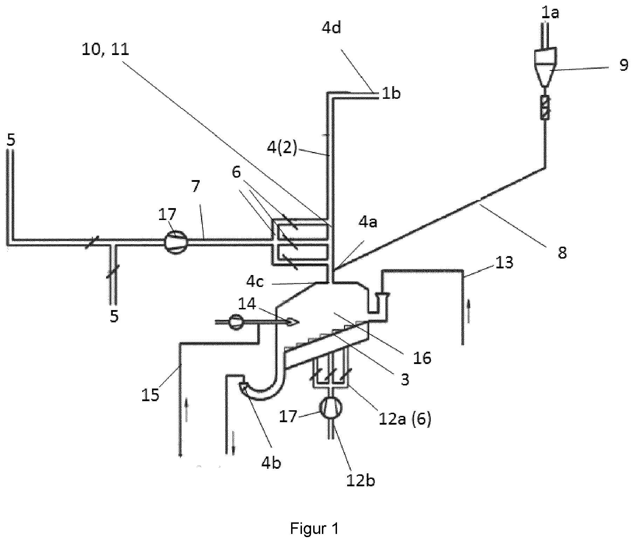

Figur 1 zeigt eine schematische Ansicht der erfindungsgemäßen Vorrichtung. Die Vorrichtung umfasst mindestens die folgenden Elemente. Ein Flugstromcalcinator 4 umfasst eine Produkteingangsöffnung 4a, eine Produktausgangsöffnung 4d zum Austragen des erzeugten kalzinierten Stoffgemisches 1b und eine Brenngasöffnung 4c. Die Produkteingangsöffnung 4a ist bevorzugt in Brenngasstromrichtung oberhalb der Brenngasöffnung 4c angeordnet. Diese Anordnung bewirkt, dass ein flugfähiges im Brenngasstrom mitführbarer mineralischen Stoffgemisch 1a (z.B. Tonmineralien) nach einer Vorwärmung in Vorwärmstufen, z.B. Zyklonvorwärmer 9 vom Brenngasstrom bzw. Kalzinierungsstrom 2 durch den Flugstromcalcinator 4 geführt werden kann und innerhalb des Flugstromcalcinators 4 kalziniert wird. Eine Brennkammer 16 ist mit der Brenngasöffnung 12a und einer Verbrennungsgaszuführung 12b (beispielsweise für Luft oder Luftgemische mit variierenden Sauerstoffanteil) und einer Brennstoffzuführung 13 verbunden. Ventile 6 ermöglichen eine Regulierung der Verbrennungsgaszuführung 12b. Die Brennkammer 16 umfasst des Weiteren eine Rostfeuerung 3. Die Rostfeuerung 3 ermöglicht eine Verbrennung und Nutzung fester, flüssiger und auch hochviskoser Brennstoffe bzw. brennbare Abfallstoffe. Eine Rückstandsöffnung 4b ermöglicht die Entfernung der nicht brennbaren Brennstoffreste. Über einen Zündbrenner 14 mit Brennstoff-Zuleitung 15 wird der in der Brennkammer 16 befindliche Brennstoff entzündet. Weiterhin ist eine Produktzuführungsleitung 8 mit der Produkteingangsöffnung 4a verbunden. Ergänzend ist eine Luftzuleitung 7 für einen zusätzlichen Gasstrom 5 vorgesehen, wobei die Luftzuleitung 7 über mindestens ein Ventil 6 mit dem Flugstromcalcinator 4 und/oder der Rostfeuerung verbunden ist. Über die Luftzuleitung 7 und gegebenenfalls angeschlossenen Gebläse 17 lässt sich der Sauerstoffanteil im Flugstromcalcinator 4 über das Ventil 6 regeln und steuern. Optional ist noch eine Sauerstoffsonde 10 und eine nicht gezeigte Einrichtung zur Datenverarbeitung 11 mit umfasst.

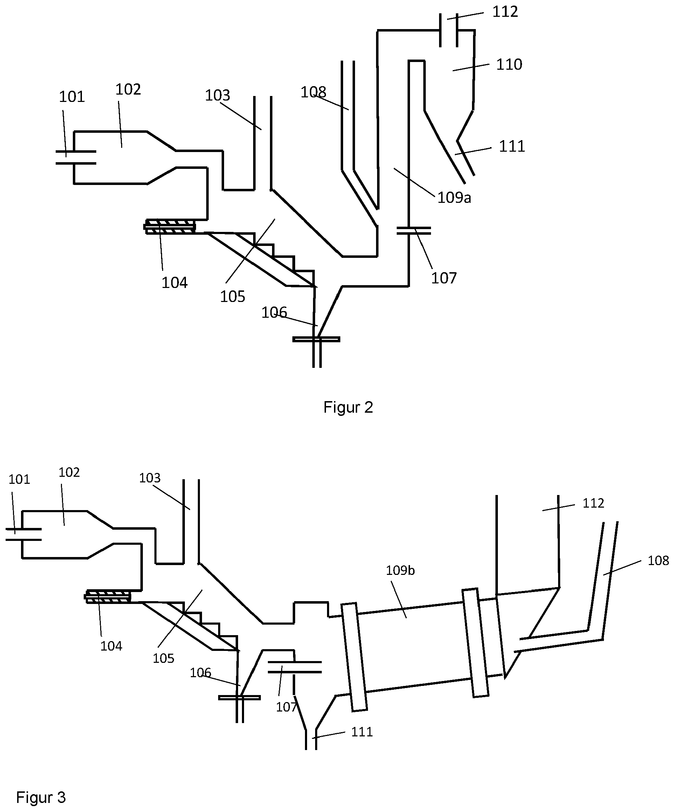

In Figur 2 und Figur 3 sind zwei weitere erfindungsgemäße Vorrichtungen dargestellt. Figur 2 zeigt eine Ausführungsform mit einem Flugstromcalcinator 109a und Figur 3 eine Ausführungsform mit einem Drehrohrofen 109b.

In beiden Ausführungsformen wird zunächst ein erster Brennstoff, beispielsweise in Luft verwirbelter Kohlestaub, über einer erste Brennstoffzuführvorrichtung 101 in die erste Brennkammer 102 eingeleitet und dort verbrannt. Die entstehenden heißen Gase werden über eine erste Verbindung in die zweite Brennkammer 105 geleitet. Dort wird über eine zweite Brennstoffzuführvorrichtung 104, beispielsweise eine Schnecke, der Ersatzbrennstoff der zweiten Brennkammer 105 zugeführt und auf einem hier treppenförmigen Rost verbrannt. Hierdurch wird die Asche des zweiten Brennstoffs zum Ascheaustrag 106 gefördert und ausgeschleust. Um die Verbrennung des zweiten Brennstoffs in der zweiten Brennkammer 105 zu verbessern, weist die zweite Brennkammer 105 eine zweite Sauerstoffzuführvorrichtung 103 auf. Die heißen Gase aus der zweiten Brennkammer 105 über eine zweite Verbindung in den Reaktor 109a, 109b geleitet.

In der ersten Ausführungsform der Figur 2 ist der Reaktor ein Flugstromcalcinator 109a. Der Flugstromcalcinator 109a weist eine dritte Brennstoffzuführvorrichtung 107 und eine Eduktzuführung 108 auf. Der Prozess wird so geregelt, dass der dritte Brennstoff in dem Flugstromcalcinator 109a in einer unterstöchiometrischen Verbrennung umgesetzt wird und es damit zu einer reduzierenden Atmosphäre kommt. Nach dem Flugstromcalcinator 109 wird das Produkt in einem Zyklon 110 abgetrennt und durch die Produktausführung 111 entnommen, während die heißen Gase durch die Abgasleitung 112 beispielsweise einem Vorwärmer zugeführt werden. In dieser Ausführungsform werden Edukt und heiße Gase in Gleichstrom geführt.

In der zweiten Ausführungsform der Figur 3 ist der Reaktor ein Drehrohrofen 109b. In dieser Ausführungsform werden Edukt und heiße Gase im Gegenstrom geführt, was einen wesentlichen Unterschied zu ersten Ausführungsform der Figur 2 ausmacht. Die Eduktzuführung 108 ist am der zweiten Verbindung gegenüberliegenden Ende des Drehrohrofens 109b angeordnet. An dieser Seite befindet sich auch die Abgasleitung 112, durch die die heißen Gase in eine Calcinator und oder einen Vorwärmer geleitet werden können. Die dritte Brennstoffzuführvorrichtung 107 ist neben der dritten Verbindung angeordnet und somit an der gleichen Seite des Drehrohrofens 109b wie die Produktausführung 111.

### Bezuaszeichenliste

- 1a: mineralisches Stoffgemisch
- 1b: kalziniertes Stoffgemisch
- 2: Kalzinierungsstrom
- 3: Rostfeuerung
- 4: Flugstromcalcinator
- 4a: Produkteingangsöffnung
- 4b: Rückstandsöffnung
- 4c: Brenngasöffnung
- 4d: Produktausgangsöffnung
- 5: zusätzlicher Gasstrom
- 6: Ventil
- 7: Luftzuleitung
- 8: Produktzuführungsleitung
- 9: Vorwärmstufen
- 10: Sauerstoffsonde
- 11: Einrichtung zur Datenverarbeitung
- 12a: Brenngasöffnung
- 12b: Verbrennungsgaszuführung
- 13: Brennstoffzuführung
- 14: Zündbrenner
- 15: Brennstoff -Zuleitung
- 16: Brennkammer
- 17: Gebläse
- 101: erste Brennstoffzuführvorrichtung
- 102: erste Brennkammer
- 103: zweite Sauerstoffzuführvorrichtung
- 104: zweite Brennstoffzuführvorrichtung
- 105: zweite Brennkammer
- 106: Ascheaustrag
- 107: dritte Brennstoffzuführvorrichtung
- 108: Eduktzuführung
- 109a: Flugstromcalcinator
- 109b: Drehrohrofen
- 110: Zyklon
- 111: Produktausführung
- 112: Abgasleitung

## Patentansprüche

1. Vorrichtung zur thermischen Behandlung von mineralischen Stoffen, wobei die Vorrichtung eine erste Brennkammer (102), eine zweite Brennkammer (105) und einen Reaktor zur thermischen Behandlung von mineralischen Stoffen aufweist, wobei die erste Brennkammer (102) zur Verbrennung eines ersten Brennstoffs ausgebildet ist, wobei die erste Brennkammer (102) und die zweite Brennkammer (105) mit einer ersten Verbindung zur Überfügung heißer Gase aus der ersten Brennkammer (102) in die zweite Brennkammer (105) verbunden sind, wobei die zweite Brennkammer (105) zur Verbrennung eines zweiten Brennstoffes ausgebildet ist, wobei die zweite Brennkammer (105) und der Reaktor mit einer zweiten Verbindung zur Überführung heißer Gase aus der zweiten Brennkammer (105) in den Reaktor verbunden sind, wobei die erste Brennkammer (102) eine erste Brennstoffzuführvorrichtung (101) zur Zuführung des ersten Brennstoffes aufweist, wobei die zweite Brennkammer (105) eine zweite Brennstoffzuführvorrichtung (104) zur Zuführung des zweiten Brennstoffes aufweist, wobei der Reaktor eine dritte Brennstoffzuführung zur Zuführung eines dritten Brennstoffes (107) aufweist, **dadurch gekennzeichnet, dass** die erste Brennkammer (102) eine erste Sauerstoffzuführvorrichtung aufweist, wobei die zweite Brennkammer (105) eine zweite Sauerstoffzuführvorrichtung (103) aufweist, wobei der erste Brennstoff und der zweite Brennstoff verschieden sind, und wobei die zweite Brennkammer (105), die zweite Verbindung und/oder der Reaktor einen Sensor zur Erfassung des Sauerstoffgehalts aufweist.

2. Vorrichtung nach Anspruch 1, **dadurch gekennzeichnet, dass** der erste Brennstoff ausgewählt ist aus der Gruppe umfassend Kohle, Kohlenstaub, Öl, Erdgas, Biogas, Methan, Ethan, Propan, Butan, Wasserstoff, wobei der zweite Brennstoff ein Ersatzbrennstoff ist.

3. Vorrichtung nach einem der vorherstehenden Ansprüche, **dadurch gekennzeichnet, dass** die zweite Brennkammer (105) zur Rostfeuerung des zweiten Brennstoffes ausgebildet ist.

4. Vorrichtung nach einem der vorherstehenden Ansprüche, **dadurch gekennzeichnet, dass** der Reaktor ein Drehrohrofen (109b) oder ein Calcinator, insbesondere ein Flugstromcalcinator (109a), ist.

5. Verfahren zur thermischen Behandlung von mineralischen Stoffen, wobei das Verfahren die folgenden Schritte aufweist:
a) Verbrennen eines ersten Brennstoffes in einer ersten Brennkammer (102), wobei über eine erste Sauerstoffzuführvorrichtung ein Gas mit Sauerstoff zugeführt wird,
b) Überführen der heißen Gase aus der ersten Brennkammer (102) in eine zweite Brennkammer (105),
c) Verbrennen eines zweiten Brennstoffes in der zweiten Brennkammer (105), wobei über eine zweite Sauerstoffzuführvorrichtung (103) ein Gas mit Sauerstoff zugeführt wird, und wobei der erste Brennstoff und der zweite Brennstoff verschieden sind,
d) Überführen der heißen Gase aus der zweiten Brennkammer (105) in einen Reaktor,
e) Unterstöchiometrisches Verbrennen eines dritten Brennstoffes in dem Reaktor und thermisches Behandeln von mineralischen Stoffen.

6. Verfahren nach Anspruch 5, **dadurch gekennzeichnet, dass** die Zuführung des dritten Brennstoffes zur Erzielung der unterstöchiometrischen Verbrennung geregelt wird aufgrund wenigstens eines der gemessenen Parameter ausgewählt aus der Gruppe Sauerstoffgehalt in der zweiten Brennkammer (105), Sauerstoffgehalt in der zweiten Verbindung, Sauerstoffgehalt im Reaktor, Eigenschaften, insbesondere Farbe, des Produktes des thermisch behandelten mineralischen Stoffes nach Entnahme aus dem Reaktor.

7. Verfahren nach einem der Ansprüche 5 bis 6, **dadurch gekennzeichnet, dass** das thermische Behandeln mit einem Sauerstoffpartialdruck pO₂ kleiner 10⁻⁸ bar, bevorzugt pO₂ kleiner 10⁻¹¹ bar erfolgt.

8. Verfahren nach einem der Ansprüche 5 bis 7, **dadurch gekennzeichnet, dass** das thermische Behandeln mit einem Volumenverhältnis CO₂/CO kleiner 1000, bevorzugt kleiner 50 erfolgt.

9. Verfahren nach einem der Ansprüche 5 bis 8, **dadurch gekennzeichnet, dass** das thermische Behandeln bei einer Luftzahl (A[Lambda]) kleiner 1, bevorzugt A[Lambda] = 0,70 bis 0,99, besonders bevorzugt A[Lambda] = 0,85 bis 0,98 erfolgt.

## Claims

1. An apparatus for the thermal treatment of mineral materials, wherein the apparatus comprises a first combustion chamber (102), a second combustion chamber (105) and a reactor for the thermal treatment of mineral materials, wherein the first combustion chamber (102) is configured for burning a first fuel, wherein the first combustion chamber (102) and the second combustion chamber (105) are connected via a first conduit for transferring hot gases from the first combustion chamber (102) into the second combustion chamber (105), wherein the second combustion chamber (105) is configured for burning a second fuel, wherein the second combustion chamber (105) and the reactor are connected via a second conduit for transferring hot gases from the second combustion chamber (105) into the reactor, wherein the first combustion chamber (102) has a first fuel feed device (101) for introducing the first fuel, wherein the second combustion chamber (105) has a second fuel feed device (104) for introducing the second fuel, wherein the reactor has a third fuel feed conduit for introducing a third fuel, **characterized in that** the first combustion chamber (102) has a first oxygen feed device, the second combustion chamber (105) has a second oxygen feed device (103), wherein the first fuel and the second fuel are different, and wherein the second combustion chamber (105), the second connection and/or the reactor has a sensor for measuring the oxygen content.

2. The apparatus as claimed in claim 1, **characterized in that** the first fuel is selected from the group consisting of coal, coal dust, oil, natural gas, biogas, methane, ethane, propane, butane, hydrogen, and the second fuel is a substitute fuel.

3. The apparatus as claimed in any of the preceding claims, **characterized in that** the second combustion chamber (105) is configured for burning the second fuel on a grate.

4. The apparatus as claimed in any of the preceding claims, **characterized in that** the reactor is a rotary tube furnace (109b) or a calciner, in particular an entrained-flow calciner (109a).

5. A process for the thermal treatment of mineral materials, wherein the process comprises the following steps:
a) combustion of a first fuel in a first combustion chamber (102), wherein a gas containing oxygen is supplied via a first oxygen feed device,
b) transfer of the hot gases from the first combustion chamber (102) into a second combustion chamber (105),
c) combustion of a second fuel in the second combustion chamber (105), wherein a gas containing oxygen is supplied via a second oxygen feed device (103), wherein the first fuel and the second fuel are different,
d) transfer of the hot gases from the second combustion chamber (105) into a reactor,
e) substoichiometric combustion of a third fuel in the reactor and thermal treatment of mineral materials.

6. The process as claimed in claim 5, **characterized in that** the introduction of the third fuel in order to achieve substoichiometric combustion is regulated on the basis of at least one of the measured parameters, where the parameter is selected from the group consisting of oxygen content in the second combustion chamber (105), oxygen content in the second connection, oxygen content in the reactor, properties, in particular color, of the product of the thermally treated mineral material after being taken from the reactor.

7. The process as claimed in either claim 5 or 6, **characterized in that** the thermal treatment is carried out at an oxygen partial pressure pO₂ of less than 10⁻⁸ bar, preferably pO₂ less than 10⁻¹¹ bar.

8. The process as claimed in any of claims 5 to 7, **characterized in that** the thermal treatment is carried out at a volume ratio of CO₂/CO of less than 1000, preferably less than 50.

9. The process as claimed in any of claims 5 to 8, **characterized in that** the thermal treatment is carried out at an air index (A[lambda]) of less than 1, preferably A[lambda] = 0.70 to 0.99, particularly preferably A[lambda] = 0.85 to 0.98.

## Revendications

1. Dispositif pour le traitement thermique de matières minérales, le dispositif présentant une première chambre de combustion (102), une deuxième chambre de combustion (105) et un réacteur pour le traitement thermique de matières minérales, la première chambre de combustion (102) étant configurée pour la combustion d'un premier combustible, la première chambre de combustion (102) et la deuxième chambre de combustion (105) étant reliées par une première liaison pour le transfert de gaz chauds de la première chambre de combustion (102) dans la deuxième chambre de combustion (105), la deuxième chambre de combustion (105) étant configurée pour la combustion d'un deuxième combustible, la deuxième chambre de combustion (105) et le réacteur étant reliés par une deuxième liaison pour le transfert de gaz chauds de la deuxième chambre de combustion (105) dans le réacteur, la première chambre de combustion (102) présentant un premier dispositif d'amenée de combustible (101) pour l'amenée du premier combustible, la deuxième chambre de combustion (105) présentant un deuxième dispositif d'amenée de combustible (104) pour l'amenée du deuxième combustible, le réacteur présentant une troisième amenée de combustible pour l'amenée d'un troisième combustible (107),
**caractérisé en ce que** la première chambre de combustion (102) présente un premier dispositif d'amenée d'oxygène, la deuxième chambre de combustion (105) présente un deuxième dispositif d'amenée d'oxygène (103), le premier combustible et le deuxième combustible étant différents, et la deuxième chambre de combustion (105), la deuxième liaison et/ou le réacteur présentant un capteur pour détecter la teneur en oxygène.

2. Dispositif selon la revendication 1, **caractérisé en ce que** le premier combustible est choisi dans le groupe comprenant le charbon, la poussière de charbon, le pétrole, le gaz naturel, le biogaz, le méthane, l'éthane, le propane, le butane, l'hydrogène, le deuxième combustible étant un combustible de substitution.

3. Dispositif selon l'une quelconque des revendications précédentes, **caractérisé en ce que** la deuxième chambre de combustion (105) est configurée pour la combustion sur grille du deuxième combustible.

4. Dispositif selon l'une quelconque des revendications précédentes, **caractérisé en ce que** le réacteur est un four tubulaire rotatif (109b) ou un calcinateur, notamment un calcinateur à flux entraîné (109a).

5. Procédé de traitement thermique de matières minérales, le procédé comprenant les étapes suivantes :
a) la combustion d'un premier combustible dans une première chambre de combustion (102), un gaz contenant de l'oxygène étant amené par l'intermédiaire d'un premier dispositif d'amenée d'oxygène,
b) le transfert des gaz chauds de la première chambre de combustion (102) dans une deuxième chambre de combustion (105),
c) la combustion d'un deuxième combustible dans la deuxième chambre de combustion (105), un gaz contenant de l'oxygène étant amené par l'intermédiaire d'un deuxième dispositif d'amenée d'oxygène (103), et le premier combustible et le deuxième combustible étant différents,
d) le transfert des gaz chauds de la deuxième chambre de combustion (105) dans un réacteur,
e) la combustion sous-stœchiométrique d'un troisième combustible dans le réacteur et le traitement thermique de matières minérales.

6. Procédé selon la revendication 5, **caractérisé en ce que** l'amenée du troisième combustible est régulée pour obtenir la combustion sous-stœchiométrique sur la base d'au moins un des paramètres mesurés choisis dans le groupe constitué par la teneur en oxygène dans la deuxième chambre de combustion (105), la teneur en oxygène dans la deuxième liaison, la teneur en oxygène dans le réacteur, les propriétés, notamment la couleur, du produit de la matière minérale traitée thermiquement après le soutirage hors du réacteur.

7. Procédé selon l'une quelconque des revendications 5 à 6, **caractérisé en ce que** le traitement thermique est effectué avec une pression partielle d'oxygène pO₂ inférieure à 10⁻⁸ bar, de préférence pO₂ inférieure à 10⁻¹¹ bar.

8. Procédé selon l'une quelconque des revendications 5 à 7, **caractérisé en ce que** le traitement thermique est effectué avec un rapport volumique CO₂/CO inférieur à 1 000, de préférence inférieur à 50.

9. Procédé selon l'une quelconque des revendications 5 à 8, **caractérisé en ce que** le traitement thermique est effectué à un indice d'air (λ[lambda]) inférieur à 1, de préférence À[lambda] = 0,70 à 0,99, de manière particulièrement préférée λ[lambda] = 0,85 à 0,98.
